# EUROPÄISCHE PATENTSCHRIFT

(11) **EP 0 832 794 B1**
(45) Veröffentlichungstag und Bekanntmachung des Hinweises auf die Patenterteilung: **27.04.2005**
(21) Anmeldenummer: 97115183.2
(22) Anmeldetag: 02.09.1997
(51) Int. Cl.: B60R 21/20

(54) **Einrichtung zum Befestigen einer Gassack-Abdeckung**
Fastening device for an airbag cover
Dispositif de fixation pour un couvercle de sac gonflable

(30) Priorität: 27.09.1996 DE 29616914 U
(43) Veröffentlichungstag der Anmeldung: 01.04.1998
(73) Patentinhaber: TRW Automotive GmbH, 73553 Alfdorf (DE)
(72) Erfinder: Fischer, Anton, 73579 Leinweiler (DE)
(74) Vertreter: Kitzhofer, Thomas, Dipl.-Ing.

(56) Entgegenhaltungen:
- EP-A- 0 694 442
- US-A- 5 297 813

## Beschreibung

Die Erfindung betrifft eine Einrichtung zum Befestigen einer Gassack-Abdeckung an einem Fahrzeugteil, wobei die Einrichtung als formschlüssige Schnapp-Verbindung ausgebildet ist, die an einem an der Gassack-Abdeckung angeformten Befestigungssteg angreift.

Eine Gassack-Abdeckung wird beispielsweise an der Lenkradnabe oder, zur Abdeckung eines Beifahrer-Gassacks, am Armaturenbrett befestigt. Aus der EP 0 669 230 A1 ist eine gattungsgemäße Einrichtung zum Befestigen der Gassack-Abdeckung bekannt, die als Schnapp-Verbindung ausgebildet ist. Dazu weist die Gassack-Abdeckung innenseitig angeformte, hakenförmige Befestigungsstege auf, die im montierten Zustand ein Fahrzeugteil hintergreifen. Die Gassack-Abdeckung wird zur Montage nur über den Gassack gesetzt und angedrückt. Die Befestigungsstege müssen so ausgeführt sein, daß sich die Abdeckung beim Entfalten des Gassacks nicht aus ihrer Verankerung löst oder gar aus ihr herausgerissen wird.

Die Erfindung schafft eine Einrichtung, die mehr Sicherheit gegen Lösen oder Zerstören der Verankerung einer Gassackabdeckung bietet als die bekannte. Dies wird bei einer Einrichtung der eingangs genannten Art erfindungsgemäß dadurch erreicht, daß am Fahrzeugteil ein durch ein Federelement aus einer Grund- in eine Verriegelungsstellung bewegbares Verriegelungselement gelagert ist und daß ein Rastmechanismus vorgesehen ist, der das Federelement in der Grundstellung am Antrieb des Verriegelungselements hindert und der durch das Andrücken der Abdeckung beim Montieren derselben gelöst werden kann.

Bei der erfindungsgemäßen Einrichtung wird der Befestigungssteg beim Andrücken der Gassack-Abdeckung während des Montagevorgangs nicht seitlich gebogen, um nach dem Entlanggleiten am Fahrzeugteil zurückzuschnappen und dieses zu hintergreifen. Ein bei der Erfindung vorgesehenes Federelement zum Antrieb des Verriegelungselements sorgt dafür, daß das Verriegelungselement um einen erheblichen Verschiebeweg verlagert werden kann und somit den Befestigungssteg großflächiger und sicherer erfaßt als die bekannte Einrichtung. Dadurch läßt sich auch die auf die Wandung im Bereich der Ausnehmung ausgeübte Flächenpressung beim Entfalten des Gassacks verringern.

Vorzugsweise ist das Verriegelungselement ein translatorisch verschiebbar gelagerter Schieberkörper, der in eine Ausnehmung im Befestigungssteg eingreift.

Der Rastmechanismus umfaßt gemäß der bevorzugten Ausführungsform einen Hebel, der das Verriegelungselement in der Grundstellung hält, wobei der Hebel vorzugsweise eine einseitig eingespannte Blattfeder ist. Durch den Befestigungssteg wird der Hebel beim Montieren der Abdeckung ausgelenkt, so daß sich das Verriegelungselement verlagern kann.

Weitere Merkmale und Vorteile der Erfindung ergeben sich aus der nachfolgenden Beschreibung und aus der nachfolgenden Zeichnung, auf die Bezug genommen wird. In den Zeichnungen zeigen:
- Figur 1 einen Halbschnitt durch eine Gassack-Abdeckung, die mit der erfindungsgemäßen Einrichtung an einer Lenkradnabe befestigt ist;
- Figur 2 eine Schnittansicht auf die Gassack-Abdeckung nach Figur 1 von oben, in der die Teile der Einrichtung hervorgehoben sind, wobei die Ansichten auf der linken und der rechten Hälfte der Zeichnung horizontale Schnitte in unterschiedlichen Ebenen darstellen; und
- Figur 3 eine Schnittansicht längs der Linie III-III in Figur 1.

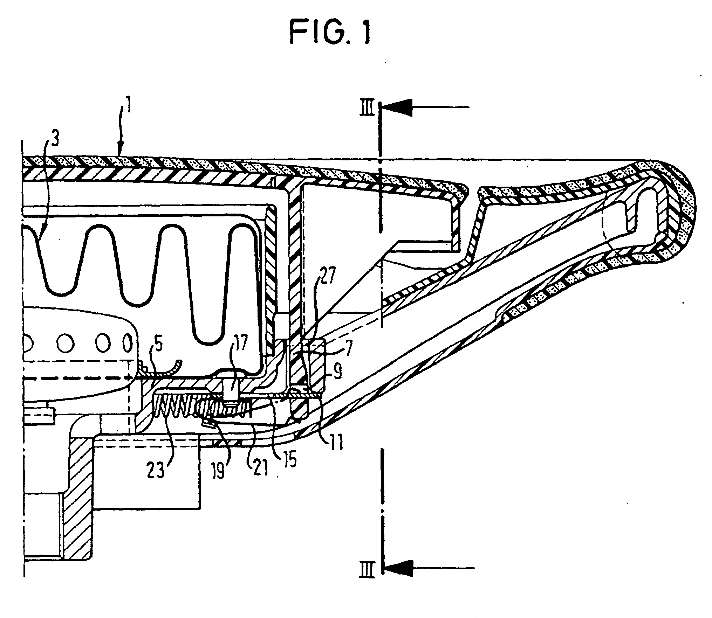

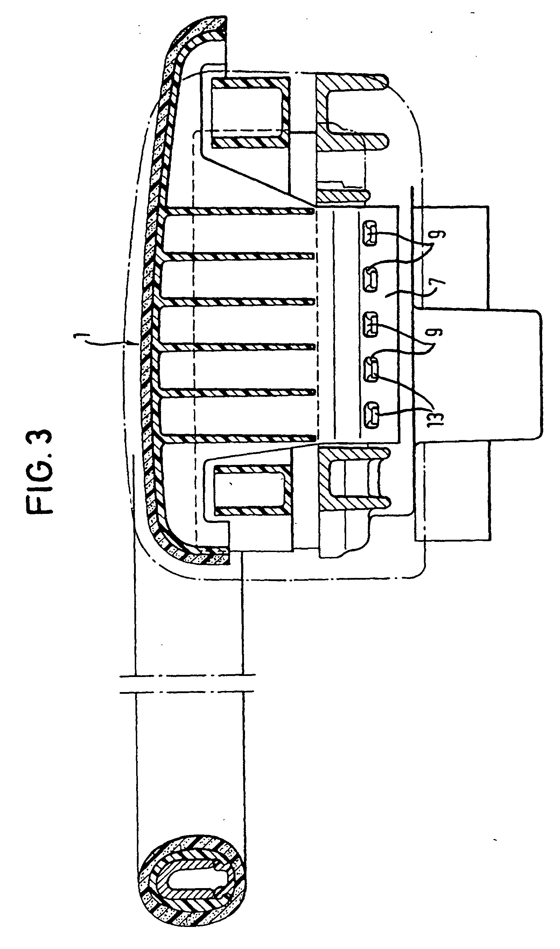

In Figur 1 ist eine Gassack-Abdeckung 1 gezeigt, die ein Gassackmodul 3, das an einer Lenkradnabe 5 befestigt ist, abdeckt. Auf der Innenseite der Abdeckung 1 sind auf gegenüberliegenden Seiten des Gassackmoduls 3 zwei abstehende, plattenartige Befestigungsstege 7 angeformt. Der in Figur 1 gezeigte rechte Befestigungssteg 7 weist im Bereich seines unteren Endes voneinander beabstandete schlitzförmige Ausnehmungen 9 (vgl. auch Figur 3) auf.

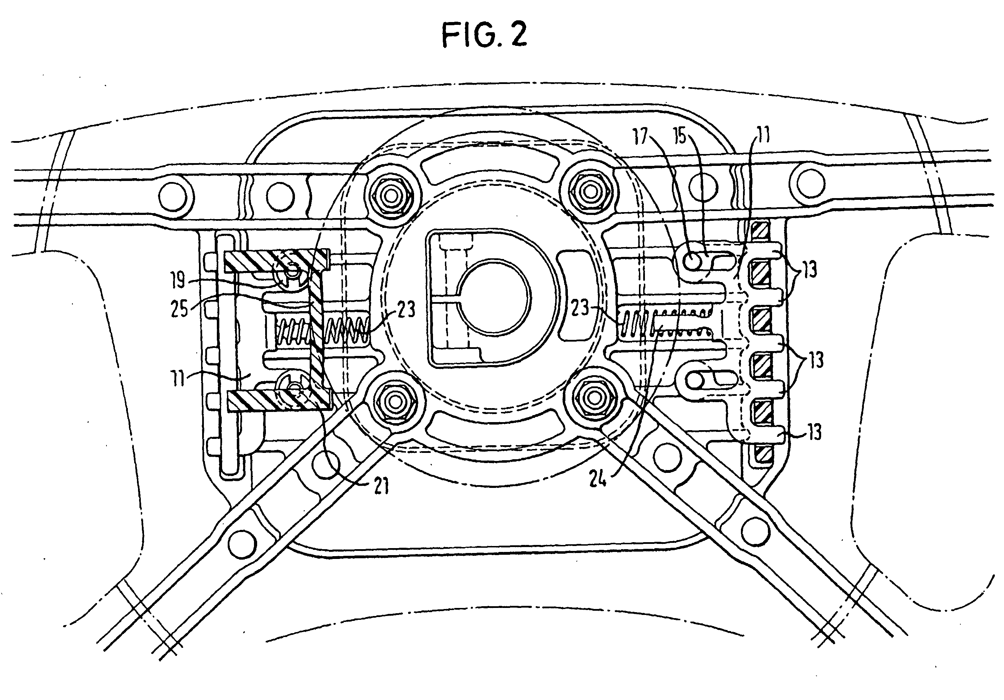

Die Abdeckung 1 wird durch eine Schnapp-Verbindung lagefest an der Lenkradnabe 5 gehalten. Neben den Ausnehmungen 9 weist die Schnapp-Verbindung ein kammartiges, als Schieberkörper ausgebildetes Verriegelungselement 11 auf, dessen Zinken 13 jeweils in eine zugeordnete Ausnehmung 9 eingreifen, wie Figur 2 zu entnehmen ist. Das Verriegelungselement 11 ist translatorisch verschiebbar an der Lenkradnabe 5 gelagert. Hierzu weist es zwei parallele Langlöcher 15 auf, durch die sich jeweils der Schaft eines zugeordneten Bolzens 17 erstreckt, der an seinem unteren Ende einen Sicherungsring 19 trägt. Im Zwischenraum zwischen der Unterseite der Wandung der Lenkradnabe 5, in der die Bolzen 17 stecken, und der Oberseite der Sicherungsringe 19 erstreckt sich das so geführte Verriegelungselement 11.

Durch die Bolzen 17 wird zusätzlich noch ein Rastmechanismus in Form eines Hebels 21 gehalten. Dieser besteht aus einer Blattfeder, die aus einem H-förmigen, ausgestanzten Federblech hergestellt ist. Zwei parallele Enden des Hebels 21 sind zwischen jeweils einem Sicherungsring 19 und dem Verriegelungselement 11 geklemmt, so daß der Hebel 21 einseitig eingespannt ist. Außerhalb dieser Einspannung ist der Hebel 1 U-förmig gebogen und erstreckt sich in Richtung des Befestigungsstegs 7, an dem er mit seinen beiden freien Enden an dessen Unterseite anliegt. Der Rastmechanismus dient dazu, das Verriegelungselement 11 in der Grundstellung, in der die Abdeckung 1 noch nicht montiert ist, zu halten. In dieser Grundstellung ist das Verriegelungselement 11 im Vergleich zu der in den Figuren gezeigten Verriegelungsstellung in Richtung Lenkradmitte verschoben.

Eine Druckfeder 23 sitzt auf einer am Verriegelungselement 11 angeformten, sich in Richtung Mitte des Lenkrades erstreckenden Zunge 23 (vgl. Figur 2) und stützt sich in der Grundstellung, in der sie zusammengedrückt ist, einerseits an der Lenkradnabe 5 und andererseits an einem Zwischensteg 25 des H-förmigen Hebels 21 ab. In Figur 1 ist die Grundstellung des Hebels 21 mit strichpunktierten Linien dargestellt. Die Druckfeder 23 wird mittels des einen Rastmechanismus bildenden Hebels 21 am Verschieben des Verriegelungselements 11 gehindert.

Zum Montieren der Abdeckung 1 wird diese einfach auf die Lenkradnabe 5 gedrückt. Die Befestigungsstege 7 werden dabei in eine schlitzartige Führung 27 in der Lenkradnabe 5 gesteckt. In das untere Ende der Führung 27 ragen zwei freie Enden des Hebels 21, wie anhand der mit strichpunktierten Linien gezeichneten Stellung des Hebels 21 in Figur 1 zu erkennen ist. Durch das Einführen des Befestigungsstegs 7 wird der Hebel 21 nach unten gedrückt, bis schließlich der Zwischensteg 25 die Druckfeder 23 freigibt. Diese verschiebt das Verriegelungselement 11 abrupt in die Verriegelungsstellung nach außen, in der sich die Zinken 13 durch die Ausnehmungen 9 erstrecken. Außenseitig stützen sich die Zinken 13 mit ihren freien Enden an einem Abschnitt der Lenkradnabe 5 ab. Der Befestigungssteg 11 ist dadurch verriegelt, und die Einrichtung löst sich auch bei Vibrationen nicht.

Die Einrichtung zum Befestigen der Gassack-Abdeckung 1 kann wieder gelöst werden, indem das Verriegelungselement 13 in die Grundstellung geschoben und die Abdeckung 1 abgenommen wird, so daß der Hebel 21 zurückfedern kann, um die Druckfeder 23 zu halten.

Aufgrund der formschlüssigen Verriegelung und der großen Anlageflächen zwischen dem Verriegelungselement 11 und dem Befestigungssteg 7 entstehen beim Aufreißen der Abdeckung 1 während des Entfaltens des Gassacks keine zu hohen Flächenpressungen, die dazu führen könnten, daß die Ausnehmungen 9 ausreißen.

## Patentansprüche

1. Einrichtung zum Befestigen einer Gassack-Abdeckung (1) an einem Fahrzeugteil, wobei die Einrichtung als formschlüssige Schnapp-Verbindung ausgebildet ist, die an einem an der Gassack-Abdeckung (1) angeformten Befestigungssteg (7) angreift, **dadurch gekennzeichnet, daß** am Fahrzeugteil ein durch ein Federelement (23) aus einer Grund- in eine Verriegelungsstellung bewegbares Verriegelungselement (11) gelagert ist und daß ein Rastmechanismus vorgesehen ist, der das Federelement (23) in der Grundstellung am Antrieb des Verriegelungselements (11) hindert und der durch das Andrücken der Abdeckung (1) beim Montieren derselben gelöst werden kann.

2. Einrichtung nach Anspruch 1, **dadurch gekennzeichnet, daß** das Verriegelungselement (11) als ein translatorisch verschiebbar gelagerter Schieberkörper ausgebildet ist, der in eine Ausnehmung (9) im Befestigungssteg (7) eingreift.

3. Einrichtung nach Anspruch 2, **dadurch gekennzeichnet, daß** der Schieberkörper eine kammartige Form aufweist, dessen Zinken (13) in zugeordnete Ausnehmungen (9) im Befestigungssteg (7) eingreifen.

4. Einrichtung nach einem der vorstehenden Ansprüche, **dadurch gekennzeichnet, daß** der Rastmechanismus einen Hebel (21) umfaßt, der das Verriegelungselement (11) in der Grundstellung hält, durch den Befestigungssteg (7) beim Montieren der Abdeckung (1) ausgelenkt wird und das Verlagern des Verriegelungselements (11) zuläßt.

5. Einrichtung nach Anspruch 4, **dadurch gekennzeichnet, daß** der Hebel (21) als einseitig eingespannte Blattfeder ausgebildet ist.

6. Einrichtung nach Anspruch 5, **dadurch gekennzeichnet, daß** der Hebel ein H-förmiges, ausgestanztes Federblech ist, dessen Zwischensteg (25) in der Grundstellung am Federelement (23) angreift.

## Claims

1. A device for fastening a gas bag cover (1) to a vehicle part, the device being designed in the form of an interlocking snap connection that engages an attachment rib (7) formed integrally with the gas bag cover (1), **characterised in that** mounted on the vehicle part is a locking element (11) which is movable by a spring element (23) out of an initial position into a locking position, and **in that** a detent mechanism is provided which prevents the spring element (23) from driving the locking element (11) when in the initial position and which may be released by pressing the cover (1) on during fitting same.

2. The device as claimed in claim 1, **characterised in that** the locking element (11) is designed in the form of a slide body which is mounted for sliding movement in translation and engages a recess (9) in the attachment rib (7).

3. The device as claimed in claim 2, **characterised in that** the slide body has a comb-like configuration having prongs (13) engaging into associated recesses (9) in the attachment rib (7).

4. The device as claimed in any of the preceding claims, **characterised in that** the detent mechanism comprises a lever (21) holding the locking element (11) in the initial position, the lever (21) being deflected by the attachment rib (7) during fitting of the cover (1) and permitting the displacement of the locking element (11).

5. The device as claimed in claim 4, **characterised in that** the lever (21) is designed in the form of a plate spring fixed at one end.

6. The device as claimed in claim 5, **characterised in that** the lever is an H-shaped, punched-out piece of spring steel sheet having an intermediate rib (25) which engages the spring element (23) in the initial position.

## Revendications

1. Dispositif de fixation d'un couvercle (1) de coussin à gaz sur une partie de véhicule, le dispositif étant réalisé sous forme d'une liaison à encliquetage par coopération de formes qui s'engage sur une nervure de fixation (7) moulée sur le couvercle (1) de coussin à gaz, **caractérisé en ce que** l'on monte sur la partie de véhicule un élément de verrouillage (11) qui peut être déplacé par un élément à ressort (23) depuis une position de base jusque dans une position de verrouillage, et **en ce que** l'on prévoit un mécanisme d'enclenchement qui, dans la position de verrouillage, empêche l'élément à ressort d'entraîner l'élément de verrouillage (11) et qui peut être libéré en appuyant sur le couvercle (1) lors du montage de celui-ci.

2. Dispositif selon la revendication 1, **caractérisé en ce que** l'élément de verrouillage (11) est réalisé sous forme de corps à coulisse monté de manière à pouvoir coulisser en translation et qui s'engage dans un évidement (9) dans la nervure de fixation (7).

3. Dispositif selon la revendication 2, **caractérisé en ce que** le corps à coulisse présente la forme d'un peigne dont les dents (13) s'engagent dans des évidements (9) associés dans la nervure de fixation (7).

4. Dispositif selon l'une des revendications précédentes, **caractérisé en ce que** le mécanisme d'enclenchement comprend un levier (21) qui maintient l'élément de verrouillage (11) dans la position de base, qui est déployé par la nervure de fixation (7) lors du montage du couvercle (1) et qui permet le déplacement de l'élément de verrouillage (11).

5. Dispositif selon la revendication 4, **caractérisé en ce que** le levier (21) est réalisé sous forme de lame de ressort tendue d'un côté.

6. Dispositif selon la revendication 5, **caractérisé en ce que** le levier est une tôle à ressort estampée, en forme de H, dont la nervure intermédiaire (25) s'engage sur l'élément à ressort (23) dans la position de base.
